# EUROPÄISCHE PATENTSCHRIFT

(11) **EP 1 110 123 B1**
(45) Veröffentlichungstag und Bekanntmachung des Hinweises auf die Patenterteilung: **20.11.2002**
(21) Anmeldenummer: 99953703.8
(22) Anmeldetag: 28.08.1999
(51) Int. Cl.: G02F 1/153

(54) **ELEKTROCHROME VERGLASUNG**
ELECTROCHROME GLAZING
VITRAGE ELECTROCHROME

(30) Priorität: 01.09.1998 DE 19839748
(43) Veröffentlichungstag der Anmeldung: 27.06.2001
(73) Patentinhaber: Flabeg GmbH, 90766 Fürth (DE)
(72) Erfinder: CARDINAL, Jens, D-44319 Dortmund (DE); GUMPRICH, Volker, D-47198 Duisburg (DE); WITTKOPF, Hartmut, D-45884 Gelsenkirchen (DE)
(74) Vertreter: Tönhardt, Marion, Dr.
(86) Internationale Anmeldenummer: DE9902790
(87) Internationale Veröffentlichungsnummer: WO00013060

(56) Entgegenhaltungen:
- EP-A- 0 475 847
- WO-A-98/08137
- DE-A- 19 630 812
- US-A- 5 525 430

## Beschreibung

Die Erfindung betrifft eine elektrochrome Verglasung, mit einer elektrochromen Scheibeneinheit und mit mindestens einer weiteren Scheibe, die mit Hilfe eines Abstandhalterrahmens unter Bildung eines Scheibenzwischenraumes im Randbereich miteinander verbunden sind, und mit einem Temperaturfühler zur Erfassung der Temperatur der elektrochromen Scheibeneinheit.

Eine solche Verglasung ist aus der EP 0 475 847 B1 bekannt. Der Temperaturfühler besteht dort aus einem Thermometer, das in Kontakt mit einer der Scheiben der elektrochromen Scheibeneinheit angeordnet ist. Dabei ist es nach dieser Veröffentlichung bevorzugt, die Temperatur auf der zum Innenraum des verglasten Gebäudes gerichteten Seite der elektrochromen Scheibeneinheit zu messen, die der Sonnenstrahlung somit nicht direkt ausgesetzt ist.

Beispiele für den Aufbau elektrochromer Scheibeneinheiten beschreibt die WO 95/31746. Im allgemeinen wird eine erste Glasscheibe mit einer transparenten Leitschicht, die beispielsweise aus dotiertem Zinnoxid, Indium-Zinnoxid oder dergleichen besteht, versehen. Auf dieser Leitschicht wird eine elektrochrome Schicht, die bevorzugt aus Wolframoxid (WOₓ) besteht, angeordnet. Dieser ersten elektrochromen Schicht steht in der fertigen Scheibeneinheit eine zweite elektrochrome Schicht, beispielsweise aus Cer-Titan-Oxid, Vanadium-Titan-Oxid oder dergleichen, als Gegenelektrode oder Ionenspeicherschicht gegenüber, die auf eine von einer zweiten Glasscheibe getragene zweite Leitschicht aufgebracht ist. Zwischen den elektrochromen Schichten befindet sich ein Ionenleiter, insbesondere ein Polymerelektrolyt, so daß die elektrochrome Scheibeneinheit als Scheibenverbund vorliegt.

Die Temperatur der elektrochromen Scheibeneinheit wird insbesondere bei der Verwendung von Polymerelektrolyten, deren Ionenwiderstand erheblich von der Temperatur abhängen kann, als Steuerparameter für die Ansteuerung der elektrochromen Scheibeneinheit benötigt. Je nach Einsatzgebiet der elektrochromen Verglasung kann diese hohen Temperaturschwankungen, oftmals mit kurzzeitigen Temperaturspitzen auf Teilbereichen der elektrochromen Scheibeneinheit, ausgesetzt sein. Bei hohen Temperaturen besteht die Gefahr, daß die an den elektrochromen Schichten anliegenden Spannungen zu hoch werden, so daß irreversible Prozesse verursacht werden und die elektrochrome Verglasung dauerhaft geschädigt wird. Um dies zu vermeiden, muß die an die Leitschichten der elektrochromen Scheibeneinheit angelegte Steuerspannung entsprechend deren Temperatur geeignet modifiziert werden, wenn eine für praktische Zwecke akzeptable Lebensdauer der elektrochromen Scheibeneinheit erreicht werden soll. Weitere Einzelheiten dazu beschreibt die DE 197 06 918 A1.

Es ist die Aufgabe der vorliegenden Erfindung, die Ansteuerung einer elektrochromen Verglasung dadurch zu unterstützen, daß die Lage des Temperaturfühlers zur Temperaturerfassung optimiert wird.

Diese Aufgabe wird durch eine elektrochrome Verglasung nach Anspruch 1 gelöst. Vorteilhafte Ausgestaltungen sind Gegenstand der Unteransprüche.

Erfindungsgemäß ist vorgesehen, den Temperaturfühler im Bereich des Abstandhalterrahmens zwischen der elektrochromen Scheibeneinheit und der weiteren Scheibe anzuordnen.

Durch die erfindungsgemäße Anordnung wird erreicht, daß der Temperaturfühler einerseits einen engen Wärmeübertragungskontakt zum Abstandhalterrahmen aufweist und andererseits außerhalb des Sichtbereichs für normale Betrachter der Verglasung angeordnet ist. "Im Bereich des Abstandhalterrahmens" umfaßt dabei alle Anordnungen, bei denen der Temperaturfühler am oder im Abstandhalterrahmen bzw. an oder in der aus Kleb- oder Dichtstoffen gebildeten Verklebung des Abstandhalterrahmens mit den Scheiben der Verglasung angeordnet ist, so daß ein guter Wärmeübertragungskontakt zu der aus diesen Elementen gebildeten Wärmebrücke im Randbereich der Verglasung sichergestellt wird. Dabei ist ein unmittelbarer Kontakt des Temperaturfühlers mit dem Abstandhalterrahmen, der eine Wärmeübertragung durch Wärmeleitung zuläßt, bevorzugt. Es hat sich aber gezeigt, daß eine ausreichende Wärmeübertragung auch durch Konvektion oder Wärmestrahlung gewährleistet sein kann, wenn der Temperaturfühler einen Abstand von nicht mehr als etwa 5 mm, besser 2 mm und bevorzugt weniger als 1 mm vom Abstandhalterrahmen oder von der Verklebung hat.

Überraschenderweise wurde festgestellt, daß für ein sicheres Funktionieren der Steuerung nicht notwendigerweise die tatsächlich in der elektrochromen Scheibeneinheit vorliegende, gegebenenfalls über die Fläche gemittelte Scheibentemperatur gemessen werden muß. sondern daß ein Meßwert, der mit der Scheibentemperatur über einen großen Temperaturbereich von etwa -20°C bis + 100°C gut korreliert, ausreicht. Für die Erfindung wird ausgenutzt, daß der eine Wärmebrücke zwischen den Scheiben einer Isolierverglasung darstellende Abstandhalterrahmenbereich sich besonders gut zur Anordnung eines Temperaturfühlers eignet. Für diese Wärmebrücke gilt, daß sich im Vergleich zu anderen Bereichen der Verglasung mit schlechteren Wärmeleiteigenschaften im Regelfall ein relativ stabiler Wärmefluß einstellt. Sogar kurzzeitige Temperaturspitzen auf Teilbereichen der elektrochromen Scheibeneinheit können überraschenderweise mit einem erfindungsgemäß angeordneten Temperaturfühler vergleichsweise zuverlässig erfaßt werden.

Nach einer vorteilhaften Ausführungsform ist der Temperaturfühler zumindest teilweise in Kleber- oder Dichtstoffmaterial eingebettet. Damit ist er unsichtbar für den normalen Betrachter und nicht der direkten Sonnenstrahlung ausgesetzt. Weiterhin wird der Temperaturfühler dadurch bei seinem Einbau fixiert und vor mechanischen Beanspruchungen und auch vor Korrosion geschützt. Beispielsweise kann der Temperaturfühler in den üblicherweise zwischen den Anlagewänden des Abstandhalterrahmens und den Scheibeninnenseiten befindlichen Butyldichtstoff auf Basis von Polyisobutylen eingebettet sein. Der Temperaturfühler kann aber auch in den zwischen die Scheibenkanten eingebrachten, die Isolierverglasung mechanisch stabilisierenden Isolierglaskleber aus Polysulfid, Silikon, Polyurethan oder dergleichen eingebettet sein. Durch die Klebereinbettung wird der Wärmeübergang von der elektrochromen Scheibeneinheit auf den Temperaturfühler weiter verbessert, was die Meßgenauigkeit erhöht.

Bevorzugt ist der Temperaturfühler unmittelbar auf der zum Scheibenzwischenraum gewandten Oberfläche der Innenscheibe der elektrochromen Scheibeneinheit angeordnet, aber immer noch so nahe am Abstandhalterrahmen, daß ein guter Wärmeübertragungskontakt über Wärmeleitung, Wärmestrahlung oder Konvektion mit dem Abstandhalterrahmen besteht.

Grundsätzlich soll im Rahmen der Erfindung der Temperaturfühler nicht auf einer der Scheiben im Sichtbereich eines normalen Betrachters angeordnet werden. Der Temperaturfühler befindet sich zweckmäßig auf der der elektrochromen Scheibeneinheit zugewandten Seite des Abstandhalterrahmens.

Vorzugsweise weist der Abstandhalterrahmen in der Anlagewand zur elektrochromen Scheibeneinheit eine Ausnehmung auf, in der der Temperaturfühler angeordnet ist. Diese Ausnehmung kann lokal begrenzt sein, kann sich aber auch über die gesamte Rahmenlänge erstrecken. Bevorzugt ist die Ausnehmung bogenförmig. Andersartige, z.B. an die Form des Temperaturfühlers angepaßte Geometrien sind ebenfalls möglich. Durch die Bereitstellung einer Ausnehmung wird erreicht, daß der Temperaturfühler geschützt und an definierter Stelle untergebracht werden kann, und zwar je nach Profilgeometrie und Abmessungen des Temperaturfühlers näher zum Scheibenzwischenraum und damit näher zum Kernbereich (Sichtbereich) der Verglasung hin, als es ohne eine solche Ausnehmung möglich wäre.

Es kann auch vorgesehen sein, den Temperaturfühler im Inneren des Abstandhalterrahmens, insbesondere in einer im Abstandhalterrahmen ausgebildeten Trockenmittelkammer, anzuordnen. Eine andere bevorzugte Ausführungsform besteht darin, den Temperaturfühler auf der zum Scheibenzwischenraum gewandten Seite der Innenwand des Abstandhalterrahmens anzuordnen.

Besondere Profilgeometrien lassen weitere Möglichkeiten zum Anordnen des Temperaturfühlers zu. Bekannte Abstandhalterrahmenprofile weisen in der Anlagewand zu den Scheibeninnenseiten ein abgewinkeltes Teilstück auf, das von der angrenzenden Scheibe wegweist. Der Temperaturfühler wird bevorzugt zwischen diesem Teilstück und der elektrochromen Scheibeneinheit angeordnet.

Es hat sich gezeigt, daß der Temperaturfühler im Bereich der im Einbauzustand der Verglasung unten liegenden Scheibenkante angeordnet sein sollte, da hier die Abschattung von Fensterstürzen und Leibungen usw. in der Regel am geringsten ist. Dabei ist besonders bevorzugt, daß der Temperaturfühler im Mittelabschnitt der im Einbauzustand der Verglasung unten liegenden Scheibenkante angeordnet ist. Es versteht sich. daß beim Einbau der erfindungsgemäßen Verglasung darauf geachtet werden muß, daß der Bereich des Abstandhalterrahmens, in dem der Temperaturfühler angeordnet ist, nicht mehr als nötig durch Rahmenelemente oder dergleichen abgeschattet wird.

Um die Montage zu vereinfachen, kann die Anschlußleitung des Temperaturfühlers zumindest über einen Teilbereich der Länge eine Baueinheit mit der Versorgungsleitung für die elektrochrome Scheibeneinheit bilden.

Vorzugsweise wird als Temperaturfühler ein die Temperaturabhängigkeit des elektrischen Widerstands von Halbleitern wie Silizium oder von Metallen ausnutzender oder ein anderer, ein auswertbares elektrisches Signal liefernder Temperaturfühler, z.B. ein Thermoelement, eingesetzt. Eine für eine sichere Ansteuerung der elektrochromen Scheibeneinheit hinreichend genaue Meßempfindlichkeit im Bereich von etwa -20°C bis + 100°C ist erforderlich. Der Temperaturfühler sollte mechanischen Beanspruchungen beim Einbau gewachsen und mit den üblicherweise verwendeten Isolierglasklebern und -dichtstoffen verträglich sein. Eine möglichst geringe Baugröße sowie ein lange Lebensdauer sind weitere Anforderungen.

Als Abstandhalterrahmen eignen sich sowohl Metallprofile als auch Kunststoffprofile, aber auch Verbundprofile aus verschiedenen Materialien. Für Metallprofile können grundsätzlich die bei der Fertigung von Isolierscheibeneinheiten üblichen Profilgeometrien und -materialien verwendet werden. Vorzugsweise werden für die erfindungsgemäßen Verglasungen Hohlkammerprofile verwendet, bei denen in die Kammer ein Trockenmittel zum Entfeuchten des Scheibenzwischenraumes eingebracht ist. Standardmäßig eingesetzte Materialien sind Stahl und Edelstahl, aber auch Aluminium oder Aluminiumlegierungen. Auch bei der Verwendung von Abstandhalterrahmen aus Kunststoffprofilen oder plastischen Kunststoffmassen kommen grundsätzlich alle üblichen Profilgeometrien und -materialien in Frage. Wieder sind Hohlkammerprofile bevorzugt. Die bekannt geringe Dampfdiffusionsdichtigkeit der Kunststoffmaterialien wird durch Anordnen einer den Scheibenzwischenraum überbrückenden dampfdiffusionsdichten Schicht, beispielsweise einer Metallfolie, kompensiert. Ein derart ausgestaltetes, bevorzugt für die erfindungsgemäße Verglasung eingesetztes Kunststoffprofil ist Gegenstand der nicht vorveröffentlichten DE 298 07 418 U1. Geeignete Kunststoffmaterialien sind beispielsweise Polypropylen, Polyethylenterephthalat, Polyamid oder Polykarbonat. Die Metallfolie besteht vorzugsweise aus Edelstahl oder verzinktem oder verchromtem Stahlblech. Überraschenderweise stellt auch bei solchen an sich schlecht wärmeleitenden Abstandhalterprofilen der Bereich des Abstandhalterrahmens eine die vom Temperaturfühler erfaßte Temperatur stabilisierende Wärmebrücke dar, so daß die Erfindung auch bei Verglasungen mit diesen Profilen angewendet werden kann.

Im folgenden soll die Erfindung anhand der beigefügten Zeichnungen näher erläutert werden. Dabei zeigt:
- Figur 1: eine Teil-Schnittansicht einer elektrochromen Verglasung einer ersten Ausführungsform der Erfindung;
- Figur 2: eine Schnittdarstellung ähnlich der Figur 1 mit geänderter Anordnung des Temperaturfühlers;
- Figur 3: eine Teil-Schnittansicht einer weiteren Ausführungsform der Erfindung, die auch die elektrischen Anschlüsse schematisch zeigt;
- Figur 4: eine schematische Teil-Schnittansicht einer elektrochromen Verglasung mit einem modifizierten Abstandhalterrahmen;
- Figur 5: eine weitere Teil-Schnittansicht ähnlich der Figur 1 mit Anordnung des Temperaturfühlers im Trockenmittelraum des Abstandhalterrahmens;
- Figur 6: eine Teil-Schnittansicht ähnlich der Figur 1 mit Anordnung des Temperaturfühlers im Scheibenzwischenraum;
- Figur 7: eine Teil-Schnittansicht einer elektrochromen Verglasung mit einem speziellen Abstandhalterprofil; und
- Figur 8: eine schematische Darstellung eines Fensters mit einer elektrochromen Verglasung gemäß der vorliegenden Erfindung.

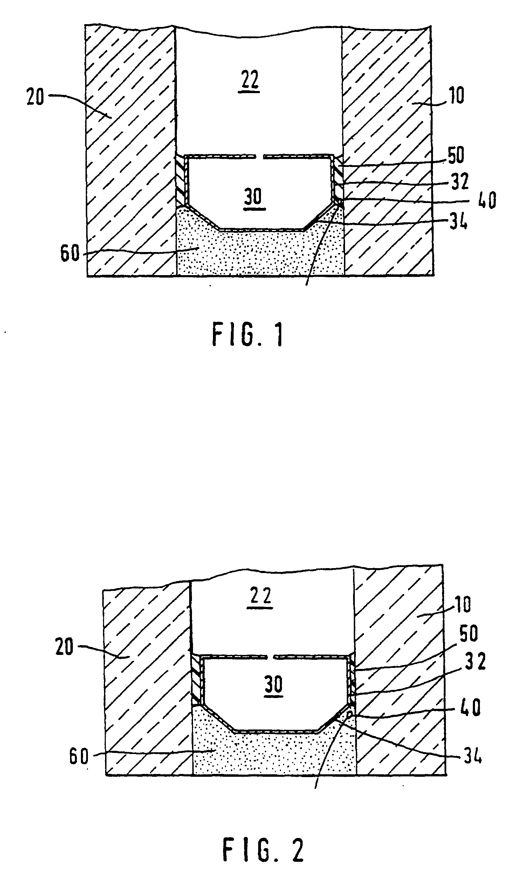

In Figur 1 ist ein erstes Ausführungsbeispiel einer elektrochromen Verglasung mit erfindungsgemäß angebrachtem Temperaturfühler 40 dargestellt. Die elektrochrome Verglasung umfaßt eine hinsichtlich ihres Schichtaufbaus nicht im Detail wiedergegebene elektrochrome Scheibeneinheit 10, die über einen Abstandhalterrahmen 30 mit einer weiteren Scheibe 20 zu einer Isolierscheibeneinheit verbunden ist. Diese Scheibe 20 besteht normalerweise aus anorganischem oder organischem Glas. Sie kann beschichtet oder auf andere Weise veredelt sein, um der Verglasung weitere besondere Eigenschaften, wie beispielsweise erhöhte Wärmedämmung oder Schalldämmung, zu verleihen. Der Abstandhalterrahmen 30 ist als zur Aufnahme von Trockenmittel geeignetes Hohlkammerprofil aus etwa 0,3 mm dickem Stahlblech gefertigt. An der zur Anlage an die Scheibeninnenseite der elektrochromen Scheibeneinheit 10 bestimmten Anlagewand 32 des Abstandhalterrahmens 30 ist ein zur Temperaturerfassung vorgesehener Temperaturfühler 40 in die in einer Dicke von etwa 0,2 - 0,4 mm auf die Anlagewand 32 aufgetragene Dichtstoffschicht 50, bei der es sich um einen Butyldichtstoff auf Polyisobutylenbasis handelt, eingebettet. Zur Außenkante der elektrochromen Verglasung ist der Abstandhalterrahmen 30 mit einer auch den Temperaturfühler 40 vor Umwelteinflüssen schützenden Verklebung 60 aus Polysulfid abgedeckt.

Die in Figur 2 dargestellte Ausführungsform einer elektrochromen Verglasung entspricht weitestgehend der von Figur 1. Hier ist allerdings abweichend von Figur 1 der Temperaturfühler 40 im Bereich eines abgewinkelten Teilstückes 34 der Anlagewand 32 innerhalb der den Abstandhalterrahmen 30 nach außen überdeckenden Verklebung 60 angeordnet.

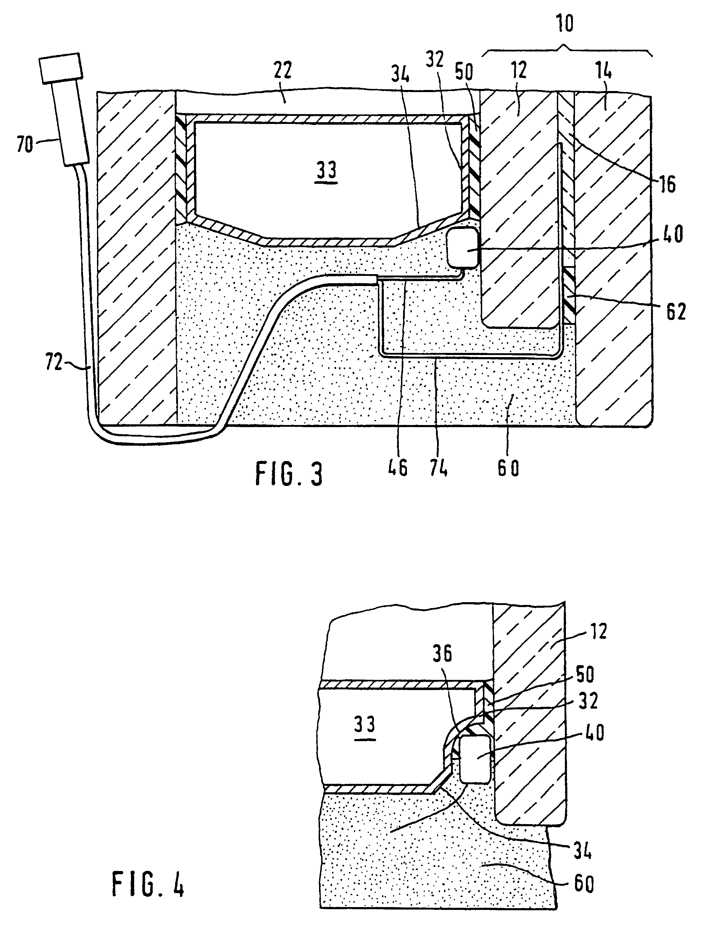

In Figur 3 ist der Randbereich der elektrochromen Verglasung weiter detailliert dargestellt. Die elektrochrome Scheibeneinheit 10 besteht aus einer Innenscheibe 12 und einer Außenscheibe 14 aus Glas und einer nur angedeuteten elektrochromen Schichtanordnung 16, die zwischen den Scheiben 12 und 14 angeordnet und durch eine Versiegelung 62 vor Umwelteinflüssen geschützt ist. Der Temperaturfühler 40 ist unmittelbar benachbart zu einem abgewinkelten Teilstück 34 der mit einer dünnen Dichtstoffschicht 50 versehenen Anlagewand 32 des Abstandhalterrahmens 30 direkt auf der zum Scheibenzwischenraum 22 weisenden Oberfläche der Innenscheibe 12 der elektrochromen Scheibeneinheit 10 angebracht. Die in einen Anschluß zur Verbindung mit der Steuer- und Versorgungseinrichtung 70 der elektrochromen Scheibeneinheit 10 mündende Versorgungsleitung 74 und die Anschlußleitung 46 des Temperaturfühlers 40 werden bis in die Nähe des Temperaturfühlers 40 als kompakte Baueinheit gestaltet. Sie verlaufen innerhalb der Verklebung 60 und außerhalb der Verglasung zumindest über einen Teilbereich ihrer Länge in einer gemeinsamen Kabelhülle 72. Die Versorgungsleitung 74 für die elektrochrome Scheibeneinheit 10 verläuft anschließend um die Kante der zu diesem Zweck gegenüber der Außenscheibe 14 zurückversetzt ausgeführten Innenscheibe 12 herum bis zu den nicht näher dargestellten Anschlußstellen der elektrochromen Scheibeneinheit 10.

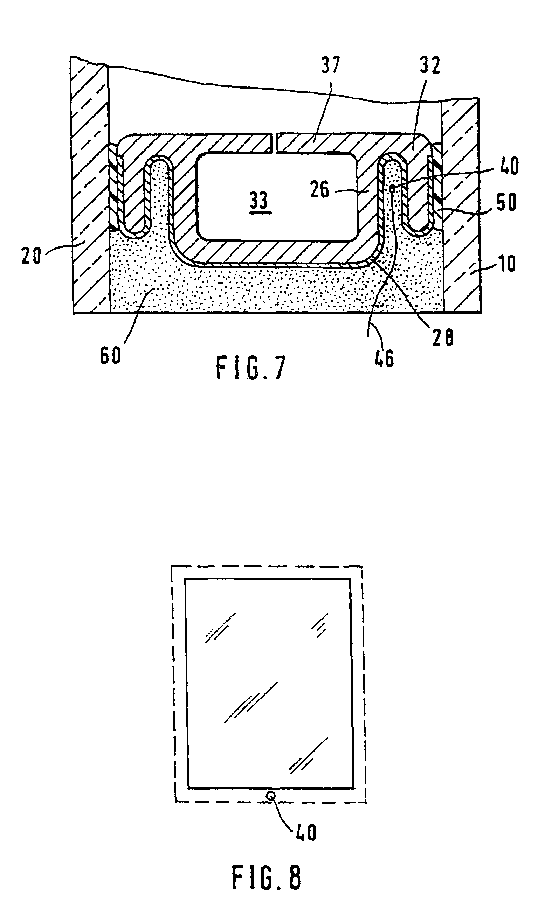

Es versteht sich, daß je nach den räumlichen Gegebenheiten am Einbauort der elektrochromen Verglasung oder ihrer Geometrie auch ein anderer Verlauf der Anschluß- und Versorgungskabel möglich ist. So können der Temperaturfühler 40 und die Anschlußstellen der elektrochromen Scheibeneinheit 10 -anders als in dem in Figur 7 dargestellten Beispiel- auch im Bereich verschiedener Kanten der Verglasung vorgesehen werden. In allen Fällen ist es aber bevorzugt, die Versorgungsleitung 74 für die elektrochrome Scheibeneinheit 10 und die Anschlußleitung 46 des Temperaturfühlers 40 innerhalb der Verklebung 60 zusammenzuführen und sie an einer geeigneten Stelle gemeinsam nach außen zu einer gemeinsamen Anschlußstelle 70 zu führen.

Bei der in der Figur 4 gezeigten Ausführungsform der Erfindung ist der Temperaturfühler 40 in einer Ausnehmung oder Einbuchtung 36 in der Anlagewand 32 des Abstandhalterrahmens 30 nahe der Innenscheibe 12 der elektrochromen Scheibeneinheit 10 angeordnet.

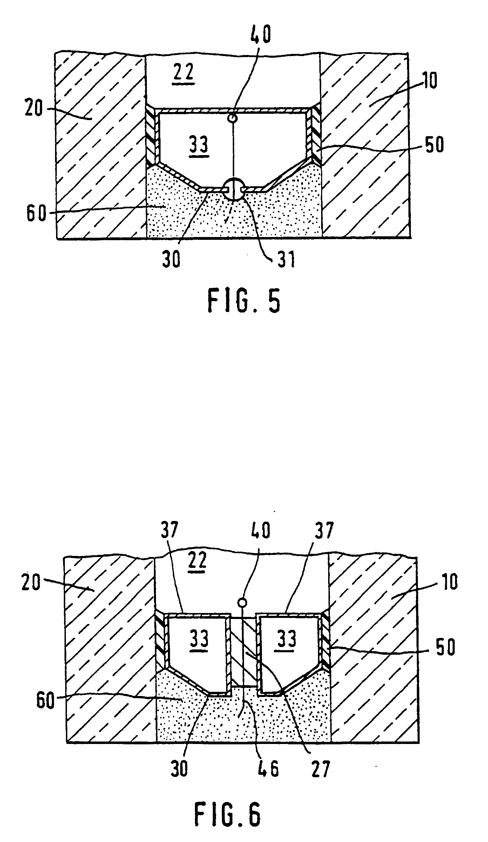

In der in Figur 5 gezeigten Ausführungsform wird der Temperaturfühler 40 durch eine kleine Bohrung 31 in der Außenwand 38 des Abstandhalterrahmens 30 bis zu der vom Scheibenzwischenraum 22 abgewandten Oberfläche von dessen Innenwand 37 geführt und befindet sich somit innerhalb der im Abstandhalterrahmen 30 ausgebildeten Trockenmittelkammer 33.

Bei der in Figur 6 gezeigten Ausführungsform wird ein zweigeteilter Abstandhalterrahmen 30 mit einem die beiden Hälften verbindenden Verbindungselement 27 verwendet, wobei die Anschlußleitung 46 des Temperaturfühlers 40 durch das Verbindungselement 27 gerührt ist. Der Temperaturfühler 40 ragt geringfügig über die Innenwand 37 des Abstandhalterrahmens 30 hinaus in den Scheibenzwischenraum 22. Alternativ könnte er auch durch geeignete Bohrungen in der Außenwand und der Innenwand eines üblichen Abstandhalterrahmens geführt werden. Er soll allenfalls geringfügig vom Abstandhalterrahmen beabstandet angeordnet werden, damit noch eine ausreichende Wärmeübertragung über Wärmeleitung, Wärmestrahlung oder Konvektion von diesem erfolgt. Das wird in der Regel dann der Fall sein, wenn der Abstand nicht mehr als etwa 5 mm beträgt.

In der Figur 7 ist ein Abstandhalterrahmen gemäß der DE 298 07 418 U1 dargestellt. Er weist als Besonderheit eine von der Trockenmittelkammer 33 beabstandete Anlagewand 32 auf. Der Temperaturfühler 40 ist zwischen der Anlagewand 32 und der benachbarten Wand 26 der Trokkenmittelkammer 33 angeordnet und in die Verklebung 60 eingebettet. Zu erkennen ist außerdem eine den Scheibenzwischenraum 22 überbrückende dampfdiffusionsdichte Metallfolie 28.

Figur 8 zeigt in schematischer Weise, wie eine erfindungsgemäße elektrochrome Verglasung als Fenster anzuordnen ist. Der Temperaturfühler 40 befindet sich einbauseitig an der Sohlenbankseite (Unterkante) des Fensters, und zwar in etwa mittig. Es hat sich herausgestellt, daß hier die Beeinträchtigung der Meßgenauigkeit durch eine Abschattung des Temperaturfühlers 40 durch Sturz und Leibungen bei wandernder Sonne am geringsten ist.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Elektrochrome Verglasung, mit einer elektrochromen Scheibeneinheit und mit mindestens einer weiteren Scheibe, die mit Hilfe eines Abstandhalterrahmens unter Bildung eines Scheibenzwischenraumes im Randbereich miteinander verbunden sind, und mit einem Temperaturfühler zum Erfassen der Temperatur der elektrochromen Scheibeneinheit, **dadurch gekennzeichnet, daß** der Temperaturfühler (40) im Bereich des Abstandhalterrahmens (30) zwischen der elektrochromen Scheibeneinheit (10) und der weiteren Scheibe (20) angeordnet ist.

2. Elektrochrome Verglasung nach Anspruch 1, **dadurch gekennzeichnet, daß** der Temperaturfühler (40) zumindest teilweise in Kleber- oder Dichtstoffmaterial (50, 60) eingebettet ist.

3. Elektrochrome Verglasung nach einem der Ansprüche 1 oder 2, **dadurch gekennzeichnet, daß** der Temperaturfühler (40) unmittelbar auf der zum Scheibenzwischenraum (22) gewandten Oberfläche der Innenscheibe (12) der elektrochromen Scheibeneinheit (10) angeordnet ist.

4. Elektrochrome Verglasung nach einem der vorangehenden Ansprüche, **dadurch gekennzeichnet, daß** der Abstandhalterrahmen (30) in der Anlagewand (32) zur elektrochromen Scheibeneinheit (10) eine Ausnehmung (36) aufweist, in der der Temperaturfühler (40) angeordnet ist.

5. Elektrochrome Verglasung nach einem der Ansprüche 1 oder 2, **dadurch gekennzeichnet, daß** der Temperaturfühler (40) im Inneren des Abstandhalterrahmens (30), insbesondere in einer im Abstandhalterrahmen (30) ausgebildeten Trockenmittelkammer (33), angeordnet ist.

6. Elektrochrome Verglasung nach einem der Ansprüche 1 oder 2, **dadurch gekennzeichnet, daß** der Temperaturfühler (40) auf der zum Scheibenzwischenraum (22) gewandten Seite der Innenwand (37) des Abstandhalterrahmens (30) angeordnet ist.

7. Elektrochrome Verglasung nach einem der Ansprüche 1 bis 3, **dadurch gekennzeichnet, daß** die zur elektrochromen Scheibeneinheit (10) gerichtete Anlagewand (32) des Abstandhalterrahmens (30) ein von der elektrochromen Scheibeneinheit (10) abgewinkeltes Teilstück (34) aufweist und daß der Temperaturfühler (40) zwischen diesem Teilstück (34) und der elektrochromen Scheibeneinheit (10) angeordnet ist.

8. Elektrochrome Verglasung nach einem der vorangehenden Ansprüche, **dadurch gekennzeichnet, daß** der Temperaturfühler (40) im Bereich der im Einbauzustand der Verglasung unten liegenden Scheibenkante angeordnet ist.

9. Elektrochrome Verglasung nach Anspruch 8, **dadurch gekennzeichnet, daß** der Temperaturfühler (40) im Mittelabschnitt der im Einbauzustand der Verglasung unten liegenden Scheibenkante angeordnet ist.

10. Elektrochrome Verglasung nach einem der vorangehenden Ansprüche, **dadurch gekennzeichnet, daß** die Anschlußleitung (46) des Temperaturfühlers (40) zumindest bereichsweise eine Baueinheit mit der Versorgungsleitung (74) für die elektrochrome Scheibeneinheit (10) bildet.

## Claims

1. Electrochromic glazing, with an electrochromic pane unit and with at least one other pane, said panes being interconnected in the edge zone by means of a spacer frame to form an inter-pane gap, and with a temperature sensor for detecting the temperature of the electrochromic pane unit, **characterised in that** the temperature sensor (40) is disposed in the region of the spacer frame (30) between the electrochromic pane unit (10) and the other pane (20).

2. Electrochromic glazing according to claim 1, **characterised in that** the temperature sensor (40) is embedded at least partially in adhesive or sealant material (50, 60).

3. Electrochromic glazing according to claim 1 or 2, **characterised in that** the temperature sensor (40) is disposed directly on that surface of the inner pane (12) of the electrochromic pane unit (10) which faces the inter-pane gap (22).

4. Electrochromic glazing according to any one of the preceding claims, **characterised in that** the spacer frame (30) has, in the abutting wall (32) to the electrochromic pane unit (10), a recess (36) in which the temperature sensor (40) is disposed.

5. Electrochromic glazing according to claim 1 or 2, **characterised in that** the temperature sensor (40) is disposed inside the spacer frame (30), particularly in a desiccant chamber formed in the spacer frame (30).

6. Electrochromic glazing according to claim 1 or 2, **characterised in that** the temperature sensor (40) is disposed on that side of the inner wall (37) of the spacer frame (30) which faces the inter-pane gap (22).

7. Electrochromic glazing according to any one of claims 1 to 3, **characterised in that** the abutting wall (32) of the spacer frame (30) facing the electrochromic pane unit (10) has a portion (34) which is bent at an angle from the electrochromic pane unit (10) and **in that** the temperature sensor (40) is disposed between said portion (34) and the electrochromic pane unit (10).

8. Electrochromic glazing according to any one of the preceding claims, **characterised in that** the temperature sensor (40) is disposed in the region of that edge of the pane which is at the bottom when the glazing is in the installed state.

9. Electrochromic glazing according to claim 8, **characterised in that** the temperature sensor (40) is disposed in the middle portion of the pane edge which is situated at the bottom when the glazing is in the installed state.

10. Electrochromic glazing according to any one of the preceding claims, **characterised in that** the connecting lead (46) of the temperature sensor (40) forms, at least in zones, a structural unit with the supply lead (74) for the electrochromic pane unit (10).

## Revendications

1. Vitrage électrochrome comportant une unité de vitre électrochrome et au moins une autre vitre, lesquelles sont reliées entre elles à l'aide d'un cadre écarteur en formant un interstice de vitre dans la zone de bordure, et comportant une sonde de température pour détecter la température de l'unité de vitre électrochrome, **caractérisé en ce que** la sonde de température (40) est disposée dans la zone du cadre écarteur (30), entre l'unité de vitre électrochrome (10) et l'autre vitre (20).

2. Vitrage électrochrome selon la revendication 1, **caractérisé en ce que** la sonde de température (40) est noyée au moins en partie dans une matière adhésive ou une matière d'étanchéité (50, 60).

3. Vitrage électrochrome selon l'une des revendications 1 ou 2, **caractérisé en ce que** la sonde de température (40) est disposée directement sur la surface, tournée vers l'interstice de vitre (22) de la vitre intérieure (12) de l'unité de vitre électrochrome (10).

4. Vitrage électrochrome selon l'une des revendications précédentes, **caractérisé en ce que** le cadre écarteur (30) présente, dans la paroi de contact (32) avec l'unité de vitre électrochrome (10), un évidement (36) dans lequel est disposée la sonde de température (40).

5. Vitrage électrochrome selon l'une des revendications 1 ou 2, **caractérisé en ce que** la sonde de température (40) est disposée à l'intérieur du cadre écarteur (30), en particulier dans une chambre à dessiccateur (33) formée dans le cadre écarteur (30).

6. Vitrage électrochrome selon l'une des revendications 1 ou 2, **caractérisé en ce que** la sonde de température (40) est disposée sur le côté, tourné vers l'interstice de vitre (22), de la paroi intérieure (37) du cadre écarteur (30).

7. Vitrage électrochrome selon l'une des revendications 1 à 3, **caractérisé en ce que** la paroi de contact (32) du cadre écarteur (30), dirigée vers l'unité de vitre électrochrome (10), comporte une pièce (34) coudée depuis l'unité de vitre électrochrome (10) et **en ce que** la sonde de température (40) est disposée entre cette pièce (34) et l'unité de vitre électrochrome (10).

8. Vitrage électrochrome selon l'une des revendications précédentes, **caractérisé en ce que** la sonde de température (40) est disposée dans la zone du bord de vitre situé à la partie inférieure à l'état monté du vitrage.

9. Vitrage électrochrome selon la revendication 8, **caractérisé en ce que** la sonde de température (40) est disposée dans la partie centrale du bord de vitre situé à la partie inférieure à l'état monté du vitrage.

10. Vitrage électrochrome selon l'une des revendications précédentes, **caractérisé en ce que** la ligne de branchement (46) de la sonde de température (40) forme au moins par endroits un ensemble constructif avec la ligne d'alimentation (74) de l'unité de vitre électrochrome (10).
